# EUROPEAN PATENT SPECIFICATION

(11) **EP 1 869 964 B1**
(45) Date of publication and mention of the grant of the patent: **18.11.2009**
(21) Application number: 07110062.2
(22) Date of filing: 12.06.2007
(51) Int. Cl.: A01D 34/82

(54) **Recessed control panel**
Eingebautes Bedienfeld
Panneau de commande encastré

(30) Priority: 19.06.2006 US 455420
(43) Date of publication of application: 26.12.2007
(73) Proprietor: Deere & Company, Moline, IL 61265-8098 (US)
(72) Inventor: Ressler, Kyle, Hartford, WI 53027 (US); Lange, Lawrence, Beaver Dam, WI 53916 (US); Loehr, Robert, Kewaskum, WI 43040 (US)
(74) Representative: Löser, Iris

(56) References cited:
- EP-A- 1 288 063
- EP-A- 1 288 764
- EP-A2- 1 319 577
- US-A1- 2005 053 447
- US-A1- 2005 139 034

## Description

This invention relates to recessed control panel for a grass mowing machine, comprising a panel mounted in a recess in a top surface of a side cover on the grass mowing machine; a plurality of controls attached to panel (see e.g. US 2005/053447).

Grass mowing machines typically have several controls for the operator including a throttle lever, choke, PTO on/off switch, light switch and/or other accessory switches or buttons. The controls may be positioned on a control panel at or near the operator seat or operator station of the grass mowing machine, and preferably are located conveniently for the operator to reach easily while mowing.

Controls on grass mowing machines often are damaged when operating the machine near trees, shrubs, fences, etc. Obstructions tend to catch on controls such as a throttle knob, and damage or move the controls away from their intended settings. A control panel for a grass mowing machine is needed that can reduce or eliminate damage or unintended movement of controls caused by obstructions.

It may be necessary to make repairs or adjustments to the controls, components, wiring harnesses and/or mechanical connections behind the control panel of a grass mowing machine. A control panel is needed that can provide easy access to service items behind the panel.

It is therefore an object of the present invention to provide a recessed control panel meeting this need.

This object is met according to the invention by the teaching of claim 1, while features developing the solution in an advantageous way are set forth in the further claims.

A recessed control panel is provided for a grass mowing machine. The control panel is recessed to reduce or eliminate damage or unintended movement of controls due to obstructions. The control panel can easily open to provide easy access to service items behind the panel.

Numerous other advantages and features of the present invention will be become readily apparent from the following detailed description of the invention and the embodiments thereof, from the claims and from the accompanying drawings wherein
- Fig. 1: is a perspective view, partially in section, of a recessed control panel in a side cover on a grass mowing machine, according to a first embodiment of the invention.
- Fig. 2: is a side section view of a recessed control panel with a throttle lever in a full or high position, according to a first embodiment.
- Fig. 3: is a side section view of a recessed control panel with a throttle lever in a low position, according to a first embodiment.
- Fig. 4: is a top perspective view of a rear portion of a grass mowing machine having a recessed control panel, according to a first embodiment.

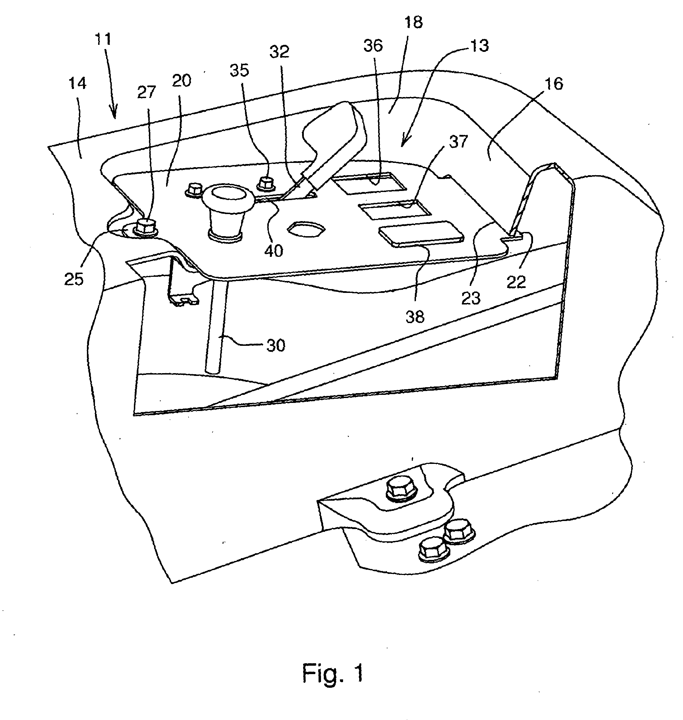

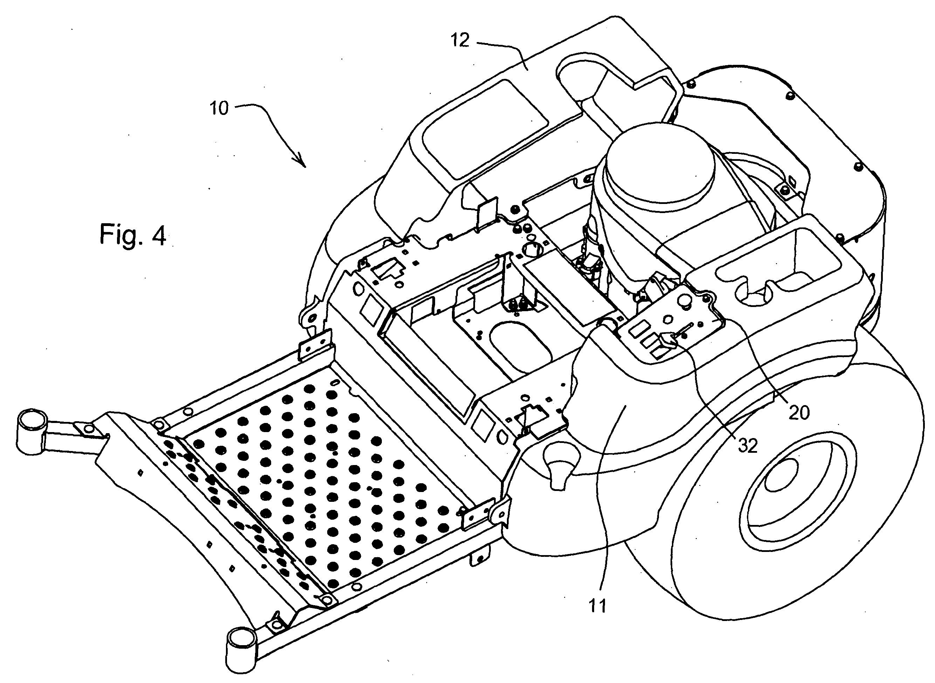

As shown in Figs. 1-4, the recessed control panel of the present invention may be on a grass mowing machine 10 having side covers 11, 12 adjacent and to each side of the operator station of the machine. The recessed control panel may be mounted in a side cover so that the controls may be positioned conveniently for the operator to reach; i.e., near the resting position of an operator's hand, on either the left or right side of the machine.

In one embodiment, each side cover may be a plastic or sheet metal body part having a top surface 14. Depending on the machine configuration, the side cover may have one or more other surfaces that may cover various components of the machine such as tires and wheels, fuel tanks, engine cooling system components, or serve other functions. Recess 13 may be an opening formed, molded or cut into the top surface 14 of side cover 11. Control panel 20 may be mounted in recess 13.

In one embodiment, recess 13 may include front wall 16 and a pair of side walls 18. Front wall 16 of recess 13 may be at a forward end of the recess, and may have a depth of between about 3,81 cm (1 ½ inches) and about 10,16 cm (4 inches) from the top surface 14 of side cover 11.

In one embodiment, control panel 20 may be a generally flat plastic or metal surface, with a plurality of slots, recesses or openings for controls that may be attached to and/or extend through the panel. These controls may include throttle lever 32, choke control 30, hour meter 36, PTO switch 37, light switch 38, and other controls if desired. At least some of the controls, such as the hour meter, PTO switch and light switch, may be mounted in and/or attached to the control panel slots so that the controls are completely below top surface 14 of side cover 11 during any operational mode or switch state of the control.

In one embodiment, control panel 20 may be positioned in recess 13 such that a forward end of the panel is lower than a rearward end of the panel. For example, the slope of the panel mounted in the recess may be between about 5 degrees and about 20 degrees from horizontal. The slope provides a means of draining moisture off the panel.

In one embodiment, control panel 20 may be mounted in recess 13 such that the panel can swing open to provide access to connections and components under the panel for servicing. For example, the lower forward end of panel 20 may be hinged to the lower end of the front wall. In the embodiment shown in Figs. 1-4, the forward end of panel 20 may be hinged to the front wall by inserting tab 22, at the lower forward end of the panel, into slot 23, at or near the lower end of the front wall. The dimensions of tab 22 may be sufficiently less than the dimensions of slot 23 so that the tab can be easily inserted and removed from the slot, and also to allow panel 20 to pivot upwardly and swing open to provide service access under the panel while the tab remains in the slot. As a result, the tab and slot can provide a hinged joint for the panel to swing open and provide access to items under the panel for servicing, without requiring additional parts or fasteners.

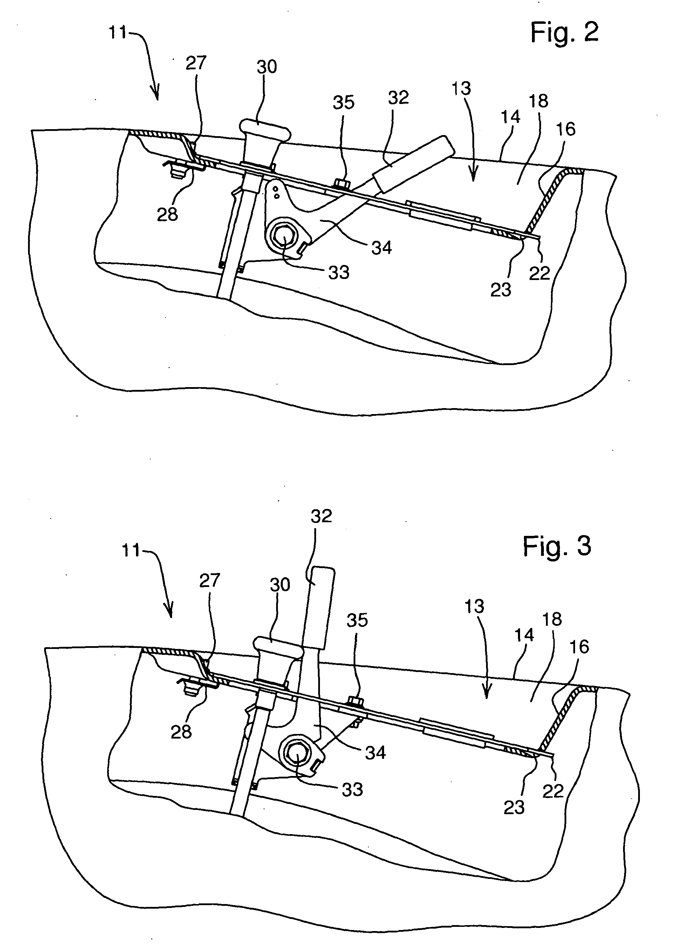

In one embodiment, panel 20 may be releasably secured to the side cover with only one fastener. As shown in Figs. 2 and 3, hold down bolt 27 is the only fastener used to secure the panel to the side cover. The second or upper end of panel 20 may be releasably secured to side cover 11 with hold down bolt 27. The hold down bolt may be inserted through projection 25 at the second end of the panel and tightened onto clip 28. The hold down bolt is the only fastener that may be engaged to secure the panel and disengaged to allow the panel to pivot upwardly and swing open.

In one embodiment, throttle linkage 34 may be mounted to control panel 20. Preferably, when the panel is mounted to the recess and the throttle is in the full or high position, no part of throttle lever 32 extends more than about 2,54 cm (one inch) above top surface 14 of side cover 11. Fig. 2 shows throttle lever 32 in the full or high position which is typically the position of the throttle while mowing. Throttle linkage 34 may be fastened to the underside of the control panel with attachment bolts 35. Throttle lever may extend through slot 40 and be connected to throttle pivot 33 in the throttle linkage 34.

As shown in Fig. 3, if the throttle is in the low position, throttle lever 32 extends further above top surface 14 of side cover 11 than when the throttle is in full or high position. For example, in the low position, at least part of the throttle lever may extend more than about 2,54 cm (one inch) above the top surface 14 of side cover 11. The throttle lever can extend further above the side cover in the low position because many grass mowing machines typically are not used for mowing with the throttle in the low position.

Having described the preferred embodiment, it will become apparent that various modifications can be made without departing from the scope of the invention as defined in the accompanying claims.

## Claims

1. A recessed control panel for a grass mowing machine (10), comprising a panel (20) mounted in a recess (13) in a top surface (14) of a side cover (11) on the grass mowing machine (10), a plurality of controls attached to panel (20), **characterized in that** the panel (20) has a lower forward end and a higher rearward end, is hinged at the lower forward end, and is releasably secured at the higher rearward end.

2. The recessed control panel according to claim 1, **characterized in that** the lower forward end includes a tab (22) that is insertable into a slot (23) in the recess (13).

3. The recessed control panel according to claim 1 or 2, **characterized in that** at least some of the controls attached to the panel (20) are below the top surface (14) of the side cover (11) in all operating states.

4. The recessed control panel according to one or more of the previous claims, **characterized in** the panel (20) is releasably secured to the side cover (11) with a single fastener, wherein the single fastener preferably is removable to swing the panel (20) up to provide service access under the panel (20).

5. The recessed control panel according to claim 4, **characterized in that** the panel (20) is hinged to the side cover (11).

6. The recessed control panel according to one or several of the previous claims, **characterized by** a pivoting throttle control (32) that extends through the panel (20), wherein the pivoting throttle control (32) preferably extends less than 2,54 cm (one inch) above the top surface (14) of the side cover (11) in a full position.

7. The recessed control panel according to claim 6, **characterized in that** the pivoting throttle control (32) extends further above the top surface (14) of the side cover (11) in a low position than in the full position.

8. The recessed control panel according to one or several of the previous claims, **characterized in that** at least one of the controls remains preferably completely below the top surface (14) of the side cover (11) in all operating states.

## Patentansprüche

1. Eingebautes Bedienfeld für eine Grasmähmaschine (10) mit einer in einer Aussparung (13) in einer Oberseite (14) einer Seitenabdeckung (11) an der Grasmähmaschine (10) angebrachten Platte (20) und mehreren an der Platte (20) befestigten Bedienelementen, **dadurch gekennzeichnet, dass** die Platte (20) ein unteres, vorderes und ein höheres, hinteres Ende aufweist, an dem unteren, vorderen Ende angelenkt ist und an dem höheren, hinteren Ende lösbar befestigt ist.

2. Eingebautes Bedienfeld nach Anspruch 1, **dadurch gekennzeichnet, dass** das untere, vordere Ende eine Nase (22) enthält, die in einen Schlitz (23) in der Aussparung (13) eingeführt werden kann.

3. Eingebautes Bedienfeld nach Anspruch 1 oder 2, **dadurch gekennzeichnet, dass** sich zumindest einige der Bedienelemente, die an der Platte (20) befestigt sind, in allen Betriebszuständen unter der Oberseite (14) der Seitenabdeckung (11) befinden.

4. Eingebautes Bedienfeld nach einem oder mehreren der vorhergehenden Ansprüche, **dadurch gekennzeichnet, dass** die Platte (20) mit einem einzigen Befestigungselement lösbar an der Seitenabdeckung (11) befestigt ist, wobei das einzige Befestigungselement vorzugsweise entfernbar ist, um die Platte (20) nach oben zu schwenken, um Wartungszugang unter der Platte (20) bereitzustellen.

5. Eingebautes Bedienfeld nach Anspruch 4, **dadurch gekennzeichnet, dass** die Platte (20) an der Seitenabdeckung (11) angelenkt ist.

6. Eingebautes Bedienfeld nach einem oder mehreren der vorhergehenden Ansprüche, **gekennzeichnet durch** ein schwenkbares Drosselbedienelement (32), das sich **durch** die Platte (20) erstreckt, wobei sich das schwenkbare Drosselbedienelement (32) in einer Vollposition vorzugsweise um weniger als 2,54 cm (ein Zoll) über der Oberseite (14) der Seitenabdeckung (11) erstreckt.

7. Eingebautes Bedienfeld nach Anspruch 6, **dadurch gekennzeichnet, dass** sich das schwenkbare Drosselbedienelement (32) in einer unteren Position weiter über der Oberseite (14) der Seitenabdeckung (11) erstreckt als in der Vollposition.

8. Eingebautes Bedienfeld nach einem oder mehreren der vorhergehenden Ansprüche, **dadurch gekennzeichnet, dass** mindestens eines der Bedienelemente in allen Betriebszuständen vorzugsweise vollständig unter der Oberseite (14) der Seitenabdeckung (11) bleibt.

## Revendications

1. Panneau de commande encastré pour une tondeuse à gazon (10), comprenant un panneau (20) monté dans un retrait (13) dans une surface supérieure (14) d'un capot latéral (11) sur la tondeuse à gazon (10), une pluralité de commandes attachées au panneau (20), **caractérisé en ce que** le panneau (20) a une extrémité avant inférieure et une extrémité arrière supérieure, est articulé à l'extrémité avant inférieure et est fixé de manière détachable à l'extrémité arrière supérieure.

2. Panneau de commande encastré selon la revendication 1, **caractérisé en ce que** l'extrémité avant inférieure comporte une languette (22) qui peut être insérée dans une fente (23) dans le retrait (13).

3. Panneau de commande encastré selon la revendication 1 ou 2, **caractérisé en ce qu'**au moins certaines des commandes attachées au panneau (20) sont en dessous de la surface supérieure (14) du capot latéral (11) dans tous les états de fonctionnement.

4. Panneau de commande encastré selon l'une quelconque ou plusieurs des revendications précédentes, **caractérisé en ce que** le panneau (20) est fixé de manière détachable au capot latéral (11) avec une attache unique, l'attache unique étant de préférence amovible pour faire pivoter le panneau (20) vers le haut pour fournir un accès de service sous le panneau (20).

5. Panneau de commande encastré selon la revendication 4, **caractérisé en ce que** le panneau (20) est articulé au capot latéral (11).

6. Panneau de commande encastré selon l'une quelconque ou plusieurs des revendications précédentes, **caractérisé par** une commande de gaz pivotante (32) qui s'étend à travers le panneau (20), la commande de gaz pivotante (32) s'étendant de préférence à moins de 2,54 cm (un pouce) au-dessus de la surface supérieure (14) du capot latéral (11) dans une position remplie.

7. Panneau de commande encastré selon la revendication 6, **caractérisé en ce que** la commande de gaz pivotante (32) s'étend davantage au-dessus de la surface supérieure (14) du capot latéral (11) dans une position basse par rapport à dans la position remplie.

8. Panneau de commande encastré selon l'une quelconque ou plusieurs des revendications précédentes, **caractérisé en ce qu'**au moins l'une des commandes reste de préférence complètement en dessous de la surface supérieure (14) du capot latéral (11) dans tous les états de fonctionnement.
